# EUROPÄISCHE PATENTSCHRIFT

(11) **EP 0 799 670 B1**
(45) Veröffentlichungstag und Bekanntmachung des Hinweises auf die Patenterteilung: **11.10.2000**
(21) Anmeldenummer: 97105192.5
(22) Anmeldetag: 27.03.1997
(51) Int. Cl.: B23Q 1/00, G01M 3/18, G01M 3/04

(54) **Werkzeugmaschine mit einem drehbar gelagerten Teil**
Machine tool with a rotably mounted part
Machine-outil avec un élément monté rotativement

(30) Priorität: 06.04.1996 DE 19613934
(43) Veröffentlichungstag der Anmeldung: 08.10.1997
(73) Patentinhaber: CHIRON-WERKE GMBH & CO. KG, 78532 Tuttlingen (DE)
(72) Erfinder: Winkler, Hans Henning, Dr.-Ing., 78532 Tuttlingen (DE); Haninger, Rudolf, 78606 Seitingen (DE)
(74) Vertreter: Otten, Hajo, Dr.-Ing.

(56) Entgegenhaltungen:
- DE-A- 3 319 618
- DE-A- 3 401 079
- US-A- 4 845 472
- PATENT ABSTRACTS OF JAPAN vol. 009, no. 006 (P-326), 11.Januar 1985 & JP 59 154334 A (HITACHI SEISAKUSHO KK), 3.September 1984,

## Beschreibung

Die vorliegende Erfindung betrifft eine Werkzeugmaschine mit einem drehbar gelagerten Teil und einer damit verbundenen Drehdurchführung, über die dem drehbar gelagerten Teil ein Fluid zuführbar ist, wobei die Drehdurchführung einen Auslaß aufweist, aus dem bei einem Leck in der Drehdurchführung leckendes Fluid austritt, und der Auslaß mit einem Fluidmelder verbunden ist, der das austretende Fluid erkennt und das Leck meldet.

Eine derartige Werkzeugmaschine ist aus der DE 43 24 952 A1 bekannt.

Das drehbar gelagerte Teil ist wie bei weiteren, aus dem Stand der Technik bekannten Werkzeugmaschinen eine Spindel, der über die Drehdurchführung Kühl- und Spülöl zugeführt wird, das zur Innenkühlung der in der Spindel aufgenommenen Werkzeuge sowie zur Spülung dient. Derartige Drehdurchführungen sind in der Regel so aufgebaut, daß sie sich selbst abdichten, wenn das Fluid unter Druck zugeführt wird. In der Regel ist dazu ein drehfestes sowie ein drehbares Rohrteil vorgesehen, wobei an beiden Rohrteilen jeweils ein Gleitring angeordnet ist.

Die beiden Gleitringe liegen mit ihren Dichtflächen aufeinander und bilden so eine Nahtstelle zwischen den Rohrteilen, an der sie für eine Abdichtung des durch die Rohrteile fließenden Fluides sorgen. Das drehfeste Rohrteil ist dabei in Längsrichtung verschiebbar angeordnet und mit einer Gummimanschette verbunden, auf die das einströmende Fluid einen derartigen Druck ausübt, daß die Dichtflächen trotz ihrer Relativbewegung zueinander die Nahtstelle abdichten.

Die Nahtstelle ist von einem Leckraum umgeben, der ansonsten gegenüber der Werkzeugmaschine abgedichtet ist, aber einen Auslaß aufweist, aus dem das leckende Fluid austritt. Dieses leckende Fluid wird von dem Auslaß undefiniert in die Maschine geführt, wo es jedoch in der Regel keine Schäden verursachen kann.

Diese Abdichtung des Leckraumes soll verhindern, daß das leckende Fluid zu Schäden an den Motoren, Lagern etc. der Spindel führt, dient also zur Erhöhung der Betriebssicherheit der so ausgerüsteten Werkzeugmaschine. Eine Überschwemmung des Spindelstockes, in dem die Spindel drehbar gelagert ist, mit Kühl- oder Spülöl würde nämlich z.B. das Fett aus den Lagern auswaschen und deren Betriebsdauer dadurch reduziert würde. Ferner könnte dieses Öl in die Motoren eintreten und dort für Kurzschlüsse sorgen oder Korrosionen bewirken.

Insofern wird also durch den an sich bekannten Einsatz einer Drehdurchführung dafür gesorgt, daß die so ausgerüstete Werkzeugmaschine eine große Betriebssicherheit aufweist, wobei der Fluidmelder zur Leckanzeige verwendet werden kann. Der Aufbau des Fluidmelders selbst ist nicht beschrieben.

Eine ähnliche Werkzeugmaschine, jedoch ohne Fluidmelder, ist in der DE 34 01 079 A1 beschrieben. Diese Werkzeugmaschine verwendet einen Mehrspindelkopf mit zentraler Kühl- und Schmiermittelversorgung, wobei die einzelnen Spindeln mit Axialkanälen versehen sind, und über eine Verteilerplatte mit einem integrierten Kanalsystem eine Zuführung des Kühl- und Schmiermittels zu den Axialkanälen der Spindeln erfolgt. Zur Leckageabführung sind in der Verteilerplatte Kanäle ausgebildet.

Die US 4,845,472 A beschreibt einen Leckmelder zur Erfassung von unerwünschtem Wasser in einem von einer Wasserleitung versorgten Bereich. Hierzu ist ein auf dem Boden stehender Sensor vorgesehen, der ein Kunststoffgehäuse umfaßt, in dem zwei Kohlenstoffelektroden durch Epoxy-Harz vergossen sind. Die beiden Elektroden sind mit einem Steckanschluß verbunden, über den der Sensor mit einer Auswerteschaltung verbunden ist. Das Gehäuse weist eine nach unten offene Fläche auf, über die die Elektroden elektrisch miteinander verbunden werden, wenn sich auf dem Boden Wasser ansammelt.

Vor diesem Hintergrund ist es Aufgabe der vorliegenden Erfindung, bei konstruktiv einfachem Aufbau die Betriebssicherheit und Bearbeitungsqualität der bekannten Werkzeugmaschine zu erhöhen.

Bei der eingangs genannten Werkzeugmaschine wird diese Aufgabe erfindungsgemäß dadurch gelöst, daß der Fluidmelder zwei Elektroden aufweist, die vorzugsweise von oben in einen Kanal hineinragen, den das leckende Fluid passiert, wobei die beiden Elektroden vorzugsweise in Richtung des Fluidflusses hintereinander in den Kanal hineinragen.

Die der Erfindung zugrundeliegende Aufgabe wird auf diese Weise vollkommen gelöst.

Nicht nur eine Überschwemmung mit leckendem Fluid kann nämlich die Betriebssicherheit beeinträchtigen, sondern auch die Tatsache, daß das leckende Fluid ja nicht an seinen Bestimmungsort gelangt, wo sein "Fehlen" ebenfalls zu Schäden führen kann. So kann ein größeres Leck in der Drehdurchführung z.B. zum Ausfall der Innenkühlung der Werkzeuge oder der Zufuhr des Spülöles führen, so daß das Werkzeug sich unzulässig erhitzt und/oder Späne und Staubpartikel nicht mehr von dem Werkzeug/dem Werkstück entfernt werden können.

Durch die Verwendung des Fluidmelders im Zusammenhang mit der Drehdurchführung wird für einen Schutz von Werkstück und Werkzeug dadurch gesorgt, daß das gemeldete Leck zu einer Unterbrechung der Bearbeitung führt. Hierzu kann der Fluidmelder z.B. mit der Ablaufsteuerung der Werkzeugmaschine verbunden werden, wobei es jedoch auch möglich ist, daß lediglich ein optischer oder akustischer Alarm ausgelöst wird, der dann das Bedienungspersonal veranlaßt, den Arbeitsprozeß zu unterbrechen.

Bei der Ausgestaltung des Fluidmelderes ist dabei von Vorteil, daß durch die Wahl der Dimensionierung des Kanales und/oder des Abstandes der beiden Elektroden zueinander sozusagen eine Schaltschwelle bestimmt wird, ab der die beiden Elektroden das Fluid erfassen. Geringe Mengen an leckendem Fluid passieren den Kanal ohne daß beide Elektroden mit dem Fluid in Berührung gelangen, so daß auf konstruktiv denkbar einfache Weise eine Diskriminierung zwischen unbedeutender und ernsthafter Leckage möglich ist. Dieser Fluidmelder kann somit lediglich durch die Wahl der geometrischen Abmaße des Kanals sowie der Anordnung der Elektroden für verschiedenste Leckageüberwachungen an der Werkzeugmaschine eingesetzt werden. Wenn die Elektroden von der Seite her in den Kanal hineinragen, so wird auch über die Höhe der Öffnungen für die Elektroden in dem Kanal die Schaltschwelle mit beeinflußt.
Bei der neuen Werkzeugmaschine ist also eine einfache Prozeßüberwachung möglich, die nicht nur die Betriebssicherheit der neuen Werkzeugmaschine erhöht, sondern darüber hinaus auch für eine bessere Bearbeitungsqualität sorgt, als dies beim Stand der Technik möglich war.

In einer Weiterbildung ist es dann bevorzugt, wenn der Fluidmelder austretendes Fluid erst ab einer bestimmten Leckrate meldet.

Hier ist von Vorteil, daß leichte Leckagen beim Einschalten z.B. der Innenkühlung nicht gemeldet werden, sondern erst ein ernsthaftes Leck zu einer Meldung führt. Mit anderen Worten, eine Leckage, die häufig beim Einschalten der Innenkühlung an der sich daraufhin selbst abdichtenden Drehdurchführung auftritt, wird genauso wenig gemeldet wie ein geringes Leck, das lediglich zu einem tröpfchenweisen Verlust an Fluid führt. Der Erfinder hat erkannt, daß derartige unbedeutende Leckagen die Betriebssicherheit und Bearbeitungsqualität der Werkzeugmaschine noch nicht nachteilig beeinflussen, sondern daß dies erst bei größeren Leckagen mit entsprechendem Verlust an Fluid auftritt.

In einer Weiterbildung ist es dann bevorzugt, wenn die beiden Elektroden mit einer Spannungsquelle und einem Meßgerät verbunden sind, das eine elektrische Größe des Fluides mißt, wobei die elektrische Größe vorzugsweise ein Widerstand oder eine Kapazität ist.

Auch diese Maßnahme ist konstruktiv von Vorteil, denn das Meßgerät muß z.B. lediglich eine Änderung in der Kapazität oder der Leitfähigkeit des Meßraumes zwischen den beiden Elektroden überwachen, wobei diese Änderung in der elektrischen Größe dadurch erfolgt, daß das leckende Fluid diesen Raum ganz oder teilweise ausfüllt. Der Wert der Widerstands- oder Kapazitätsänderung kann dann als Schwellwert genommen werden, so daß auch hier auf einfache Weise zwischen geringfügiger und gravierender Leckage unterschieden werden kann. Besonders vorteilhaft ist es jedoch, wenn der Schwellwert durch die Dimensionierung des Kanales sowie die Anordnung der Elektroden vorgegeben ist und das Meßgerät nur noch nach Art einer ja/nein-Entscheidung melden muß, ob sich Fluid zwischen den Elektroden befindet oder nicht.

Allgemein ist es bevorzugt, wenn der Fluidmelder einen an der Werkzeugmaschine befestigten Montageklotz umfaßt, in dem der Kanal vorgesehen ist, in den die Elektroden hineinragen, wobei die Elektroden vorzugsweise Schrauben sind, die von außen in Gewindebohrungen in den Montageklotz eingeschraubt sind.

Diese Maßnahme ist konstruktiv von Vorteil, da sich hier ein denkbar einfacher Aufbau ergibt. Es ist lediglich ein Montageklotz mit dem entsprechenden Kanal zu versehen, in den dann von außen zwei Schrauben als Elektroden eingeschraubt werden. Dieser Fluidmelder kann somit auch auf einfache Weise bei bereits bestehenden Werkzeugmaschinen nachgerüstet werden.

Ferner ist es bevorzugt, wenn quer zu den Gewindebohrungen verlaufende und in diese mündende Bohrungen vorgesehen sind, in die Anschlußdrähte eingeschoben sind, die elektrisch mit den Schrauben verbunden sind.

Hier ist von Vorteil, daß zum einen eine einfache Kontaktierung der Schrauben möglich ist, wobei dennoch für eine gute Abdichtung des Kanales nach außen gesorgt wird. Diese Abdichtung erfolgt dadurch, daß die Schrauben entsprechend dichten. Da die für die Anschlußdrähte vorgesehenen Bohrungen nicht in den Kanal selbst sondern in die Gewindebohrungen für die Schrauben münden, stellen diese weiteren Bohrungen keine zusätzliche Leckquelle dar. Ein weiterer Vorteil dieser gesamten Konstruktion liegt damit darin, daß das leckende Fluid nicht mehr undefiniert in die Werkzeugmaschine abgegeben wird, sondern von dem in dem Montageklotz vorgesehenen Kanal entsprechend z.B. in eine Auffangwanne abtropfen kann.

Dabei ist es weiter bevorzugt, wenn die Anschlußdrähte über eine Zugentlastung, vorzugsweise eine Halteschelle an dem Montageklotz festgelegt sind.

Bei dieser Maßnahme ist von Vorteil, daß ein unbeabsichtigtes Lösen der Anschlußdrähte verhindert wird, so daß die Betriebssicherheit des Fluidmelders und damit der durch diesen überwachten Werkzeugmaschine erhöht wird.

Allgemein ist es bevorzugt, wenn der Fluidmelder unterhalb von dem Auslaß der Drehdurchführung angeordnet ist und der Auslaß vorzugsweise mit dem Fluidmelder über einen Schlauch verbunden ist, der für das leckende Fluid durchgehend eine Gefällstrecke darstellt.

Hier ist von Vorteil, daß sich das leckende Fluid nicht in der Drehdurchführung sammelt, sondern kontinuierlich aus dem dort vorgesehenen Leckraum abgeführt wird. Auf diese Weise wird zum einen sichergestellt, daß sich nicht doch eine größere Menge von Fluid in der Drehdurchführung ansammelt und schließlich in Lager oder Motoren der Werkzeugmaschine gelangt, sondern - wie gesagt - kontinuierlich abgeführt wird. Ein weiterer Vorteil liegt darin, daß die Leckage so wie sie vorliegt, das Fluid zu dem Fluidmelder führt, dem also keine falschen Ergebnisse "vorgetäuscht" werden. Wenn nämlich der Fluidmelder oberhalb des Auslasses angeordnet wäre, so würde sich zunächst das leckende Fluid in dem Fluidraum und in dem Schlauch sammeln, ohne daß es zu dem Fluidmelder gelangen kann. Wenn dann eine bestimmte Menge an Fluid ausgeflossen ist, kann es dann zu einer Art Überschwemmung des Fluidmelders mit Fluid führen, was dieser dann als Leckage meldet, obwohl sich eigentlich nur infolge von tröpfchenweisem Verlust über längere Zeit eine größere Menge an Lecköl angesammelt hat.

Bei der Drehdurchführung ist es noch von Vorteil, wenn sie ein drehfestes sowie ein drehbares Rohrteil aufweist, an beiden Rohrteilen je ein Gleitring angeordnet ist, die beiden Gleitringe mit ihren Dichtflächen aufeinanderliegen und so eine Nahtstelle zwischen den Rohrteilen bilden sowie für eine Abdichtung des durch die Rohrteile fließenden Fluids sorgen, wobei vorzugsweise das drehfeste Rohrteil in Längsrichtung verschiebbar angeordnet und mit einer Druckfläche verbunden ist, auf die fließendes Fluid einen derartigen Druck ausübt, daß die Dichtflächen trotz ihrer Relativbewegung zueinander eine Abdichtung der Nahtstelle bewirken, die vorzugsweise von einem ansonsten gegenüber der Werkzeugmaschine abgedichteten Leckraum umgeben ist, der mit dem Auslaß verbunden ist.

Durch diese Maßnahmen wird auf konstruktiv einfache Weise für eine sich selbst abdichtende Drehdurchführung gesorgt, wobei eine Leckage im Bereich der Gleitringe zu einem Ausfluß von Fluid in den Leckraum führt, von wo dieses Fluid jedoch nicht in die Werkzeugmaschine sondern lediglich über den Auslaß zu dem Fluidmelder gelangen kann.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine schematische und ausschnittsweise Darstellung der neuen Werkzeugmaschine mit Drehdurchführung und geschnitten dargestelltem Fluidmelder;
- Fig. 2: eine Schnittdarstellung der Drehdurchführung aus Fig. 1;
- Fig. 3: eine Draufsicht auf den Fluidmelder aus Fig. 1; und
- Fig. 4: ein Schaltbild, das die elektrische Verschaltung der Elektroden aus dem Fluidmelder der Fig. 1 und 3 zeigt.

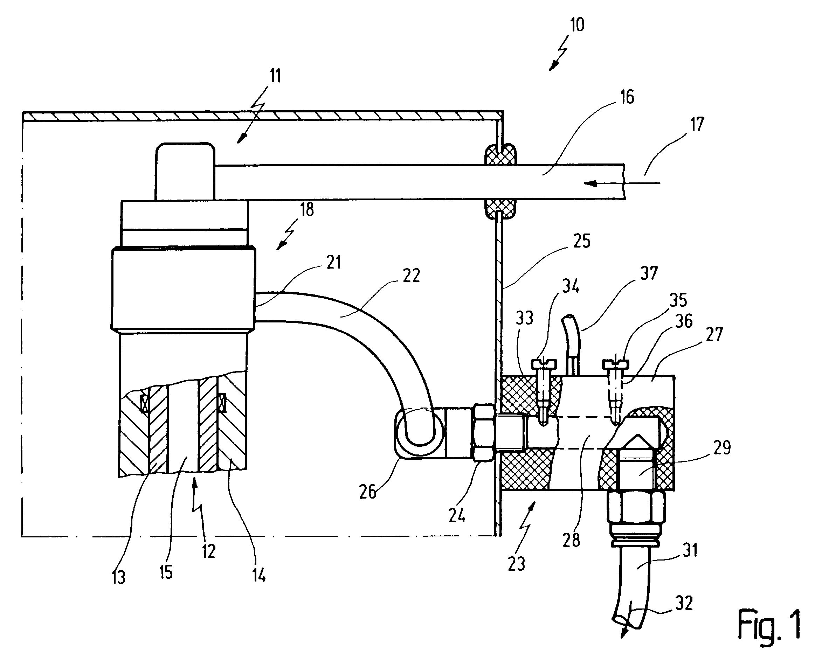

In Fig. 1 ist mit 10 eine Werkzeugmaschine bezeichnet, die einen bei 11 angedeuteten Spindelstock umfaßt, in dem als drehbares Teil 12 eine Spindel 13 gelagert ist. Die Spindel 13 ist in bekannter Weise in einem Spindelrohr 14 gelagert und weist einen zentrischen inneren Kanal 15 auf, über den Fluid in Form von Kühl- oder Spülöl zu einer in Fig. 1 nicht gezeigten Werkzeugaufnahme der Spindel 13 führt, wo dieses Öl zur Kühlung und/oder Spülung des arbeitenden Werkzeuges dient.

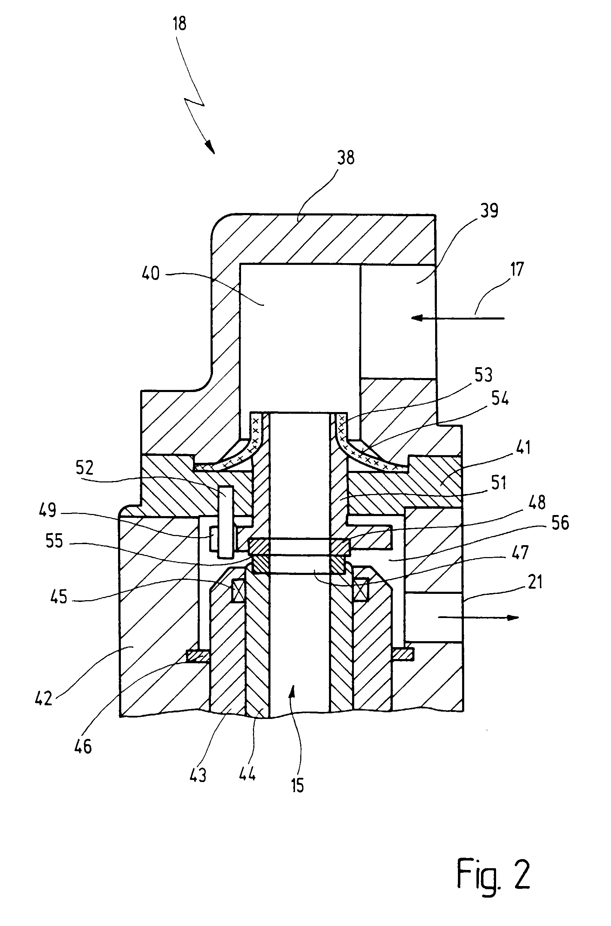

In Fig. 1 ist ferner eine Zuleitung 16 zu erkennen, über die das Fluid in Richtung eines Pfeiles 17 einer Drehdurchführung 18 zugeführt wird, die zwischen der Zuleitung 16 und dem Spindelstock 11 angeordnet ist. Diese Drehdurchführung 18 dichtet sich in im Zusammenhang mit Fig. 2 noch zu beschreibender Weise automatisch ab, sobald Fluid unter Druck in die Zuleitung 16 hineingeführt wird.

Sollte es in der Drehdurchführung 18 zu einer Leckage kommen, so tritt das leckende Fluid an einem Auslaß 21 der Drehdurchführung 18 aus und gelangt über einen Schlauch 22 zu einem Fluidmelder 23, der mittels einer Schraube 24 an einer Gehäusewand 25 befestigt ist. Diese Schraube 24 ist gleichzeitig mit einem Anschlußstück 26 verbunden, in das der Schlauch 22 mündet. Die Schraube 24 erfüllt also zwei Aufgaben, zum einen dient sie der Befestigung des Fluidmelders 23 an der Gehäusewand 25 und zum anderen dient sie zum Anschluß des Fluidmelders 23 an den Schlauch 22.

Der Fluidmelder 23 umfaßt einen Montageklotz 27, in dem ein Kanal 28 vorgesehen ist, der endseitig mit einer nach unten abgehenden Bohrung 29 kommuniziert. In diesen Kanal 28 ist in Fig. 1 von links die selbst einen Kanal aufweisende Schraube 24 eingeschraubt, so daß Fluid durch die Schraube 24 in den Kanal 28 eintritt. Dieses leckende Fluid tritt über die Bohrung 29 in einen dort angeschlossenen Leckschlauch 31 aus, der das bei 32 angedeutete, leckende Fluid z.B. in eine Auffangwanne führt.

In den Kanal 28 mündet eine Gewindebohrung 33, in die eine erste Schraube 34 derart eingeschraubt ist, daß sie mit ihrem unteren Ende in den Kanal 28 hineinragt. In Flußrichtung des Fluides hinter der Schraube 34 ist eine weitere Schraube 35 angeordnet, die in eine weitere Gewindebohrung 36 eingeschraubt ist. Auch die weitere Schraube 35 ragt mit ihrem unteren Ende in den Kanal 28 hinein.

Die beiden Schrauben 34, 35 sind in noch zu beschreibender Weise mit einem Anschlußkabel 37 verbunden und dienen in ebenfalls noch zu beschreibender Weise zur Erkennung und Meldung des austretenden Fluids, das in den Kanal 28 gelangt.

In Fig. 2 ist jedoch zunächst die Drehdurchführung 18 im Längsschnitt schematisch dargestellt. Die Drehdurchführung 18 umfaßt zunächst ein topfartiges Deckelteil 38, in das über eine Einlaßöffnung 39 das Fluid hineingelangt, das sich in einem Innenraum 40 sammelt.

An das Deckelteil 38 schließt sich ein Zwischenteil 41 an, auf das dann in Fig. 2 unten ein Bodenteil 42 folgt. In dem Bodenteil 42 ist eine Hülse 43 angeordnet, in der drehbar ein Rohrteil 44 gelagert ist, das wiederum mit der Spindel 13 aus Fig. 1 drehfest verbunden ist. Dementsprechend weist das drehbare Rohrteil 44 den Kanal 15 auf, der auch durch die Spindel 13 hindurchgeht.

Die drehbare Lagerung des Rohrteiles 44 an der Hülse 43 erfolgt über ein Lager 45. Zwischen der Hülse 43 und dem Bodenteil 42 ist noch eine Dichtung 46 vorgesehen, deren Bedeutung weiter unten noch erläutert wird.

Das drehbare Rohrteil 44 weist an seinem oberen Ende einen Gleitring 47 auf, der mit einem weiteren Gleitring 48 zusammenwirkt, der in einem Flansch 49 befestigt ist. Dieser Flansch 49 sitzt an einem drehfesten Rohrteil 51, das längsverschieblich aber drehfest an dem Zwischenteil 41 gelagert ist. Zu diesem Zweck weist das Zwischenteil 41 zunächst einen Stift 52 auf, der in den Flansch 49 eingreift, so daß dieser zwar drehfest aber längsverschieblich gegenüber dem Zwischenteil 41 gehalten ist.

Das drehfeste Rohrteil 51 weist an seinem oberen Ende eine Gummimanschette 53 auf, die mit ihrem Außenrand zwischen das Deckelteil 38 sowie das Zwischenteil 41 geklemmt ist. Da die Gummimanschette andererseits am oberen Ende des drehfesten Rohrteiles 41 befestigt ist, ermöglicht sie eine Verschiebung des Rohrteiles 51 in Fig. 2 nach oben und nach unten.

Die Gummimanschette 53 weist in Fig. 2 nach oben weisend eine Druckfläche 54 auf, mit der in den Innenraum 40 einströmendes Fluid in Anlage gelangt und dabei das Rohrteil 51 nach unten drückt, so daß die beiden Gleitringe 47 und 48 mit ihren Dichtflächen aufeinandergedrückt werden. Diese Dichtflächen bilden eine Nahtstelle 55 zwischen den beiden Rohrteilen 44 und 51.

Wenn kein Fluid die Drehdichtung 18 durchfließt, so können die beiden Gleitringe 47, 48 einen gewissen Abstand zueinander haben, der jedoch zu Null verringert wird, sobald Fluid auf die Druckfläche 54 der Gummimanschette 43 aufdrückt. Bevor auf diese Weise die Nahtstelle 55 vollständig abgedichtet ist, kann jedoch etwas Fluid seitlich zwischen den beiden Gleitringen 47, 48 austreten und in einen die Nahtstelle 55 umgebenden Leckraum 56 gelangen. Dieser Leckraum ist durch die bereits erwähnte Dichtung 46 in Fig. 2 nach unten abgedichtet, so daß sich in dem Leckraum 56 ansammelndes Fluid nicht nach unten in die Spindel austreten kann. Dieses Fluid tritt vielmehr durch den bereits aus Fig. 1 bekannten Auslaß 21 in den Schlauch 22 ein und gelangt dort zu dem Fluidmelder 23.

Zurückkehrend zu Fig. 1 ist zu erkennen, daß der Fluidmelder 23 unterhalb des Auslasses 21 angeordnet ist und daß der Schlauch 22 kontinuierlich nach unten gebogen ist, so daß er durchgehend eine Gefällstrecke für das aus dem Auslaß 21 austretende, leckende Fluid darstellt. Auf diese Weise wird verhindert, daß sich eine größere Menge an Fluid in dem Leckraum 56 ansammelt.

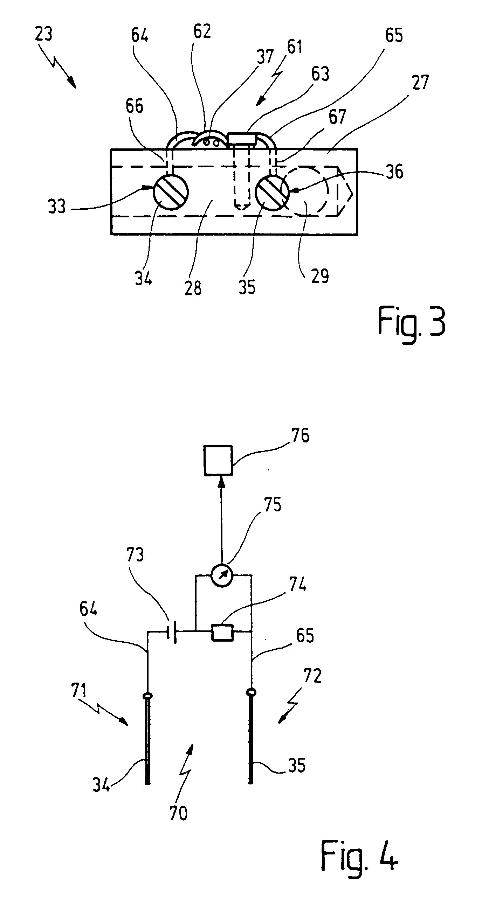

In Fig. 3 ist jetzt der Fluidmelder 23 aus Fig. 1 in einer Draufsicht dargestellt, so daß die beiden Schrauben 34 und 35 von oben sichtbar sind. Seitlich an dem Montageklotz 27 ist für das Anschlußkabel 37 eine Zugentlastung 61 aus Halteschelle 62 sowie Befestigungsschraube 63 vorgesehen. Die Halteschelle 62 drückt das Anschlußkabel 37, das aus zwei Anschlußdrähten 64 und 65 besteht, seitlich gegen den Montageklotz 27 und hält es dort unverrückbar fest.

Die beiden Anschlußdrähte 64 und 65 stecken in Bohrungen 66 bzw. 67, die quer zu den Gewindebohrungen 33 bzw. 36 verlaufen, in die sie auch einmünden. Auf diese Weise wird für eine elektrische Verbindung zwischen den Schrauben 34, 35 sowie den Anschlußdrähten 64, 65 gesorgt.

Anhand des elektrischen Prinzipschaltbildes der Fig. 4 soll jetzt die Funktion des Fluidmelders 23 erklärt werden:

Die beiden Schrauben 34 und 35 spannen zwischen sich einen Meßraum 70 auf, wirken also als Elektroden 71 bzw. 72. Diese beiden Elektroden 71 und 72 sind über die Anschlußdrähte 64 bzw. 65 mit einer Reihenschaltung aus einer Spannungsquelle 73 sowie einem Meßwiderstand 74 verbunden. Parallel zu dem Meßwiderstand 74 ist ein Meßgerät 75 geschaltet, das mit einer Maschinensteuerung 76 der neuen Werkzeugmaschine 10 verbunden ist.

Wenn sich jetzt in dem Kanal 28 eine hinreichende Menge an Fluid sammelt, so gelangen schließlich die beiden Schrauben 34, 35 in elektrischen Kontakt mit diesem Fluid. Die Spannungsquelle 73 kann daraufhin einen Strom durch das Fluid schicken, was zu einem Spannungsabfall an dem Meßwiderstand 74 führt. Dieser Spannungsabfall wird von dem Meßgerät 75 gemessen und an die Maschinensteuerung 76 weitergeleitet, die wegen der so gemeldeten Leckage den Bearbeitungsprozeß unterbricht.

Mit der in Fig. 4 gezeigten Schaltung wird also die elektrische Leitfähigkeit des Fluides ausgenutzt, um nach der Art einer ja/nein-Entscheidung über das Meßgerät 75 das Vorhandensein von Fluid in dem Meßraum 70 zu messen und zu melden. Selbstverständlich ist es auch möglich, statt der elektrischen Leitfähigkeit die Kapazität oder eine andere elektrische Größe des Fluides zu messen.

## Patentansprüche

1. Werkzeugmaschine mit einem drehbar gelagerten Teil (12) und einer damit verbundenen Drehdurchführung (18), über die dem drehbar gelagerten Teil (12) ein Fluid zuführbar ist, wobei die Drehdurchführung (18) einen Auslaß (21) aufweist, aus dem bei einem Leck in der Drehdurchführung (18) leckendes Fluid austritt, und der Auslaß (21) mit einem Fluidmelder (23) verbunden ist, der das austretende Fluid erkennt und das Leck meldet,
dadurch gekennzeichnet, daß der Fluidmelder (23) zwei Elektroden (71, 72) aufweist, die vorzugsweise von oben in einen Kanal (28) hineinragen, den das leckende Fluid passiert.

2. Werkzeugmaschine nach Anspruch 1, dadurch gekennzeichnet, daß der Fluidmelder (23) austretendes Fluid erst ab einer bestimmten Leckrate meldet.

3. Werkzeugmaschine nach Anspruch 1 oder 2, dadurch gekennzeichnet, daß die Elektroden (71, 72) in Richtung des Fluidflusses hintereinander in den Kanal (28) hineinragen.

4. Werkzeugmaschine nach einem der Ansprüche 1 bis 3, dadurch gekennzeichnet, daß die beiden Elektroden (71, 72) mit einer Spannungsquelle (73) und einem Meßgerät (75) verbunden sind, das eine elektrische Größe des Fluides mißt.

5. Werkzeugmaschine nach Anspruch 4, dadurch gekennzeichnet, daß die elektrische Größe ein Widerstand oder eine Kapazität ist.

6. Werkzeugmaschine nach einem der Ansprüche 1 bis 5, dadurch gekennzeichnet, daß der Fluidmelder (23) einen an der Werkzeugmaschine (10) befestigten Montageklotz (27) umfaßt, in dem der Kanal (28) vorgesehen ist, in den die Elektroden (71, 72) hineinragen.

7. Werkzeugmaschine nach Anspruch 6, dadurch gekennzeichnet, daß die Elektroden (71, 72) Schrauben (34, 35) sind, die von außen in Gewindebohrungen (33, 36) in den Montageklotz (27) eingeschraubt sind.

8. Werkzeugmaschine nach Anspruch 7, dadurch gekennzeichnet, daß quer zu den Gewindebohrungen (63, 66) verlaufende und in diese mündende Bohrungen (66, 67) vorgesehen sind, in die Anschlußdrähte (64, 65) eingeschoben sind, die elektrisch mit den Schrauben (34, 35) verbunden sind.

9. Werkzeugmaschine nach Anspruch 8, dadurch gekennzeichnet, daß die Anschlußdrähte (64, 65) über eine Zugentlastung (61) , vorzugsweise eine Halteschelle (62) an dem Montageklotz (27) festgelegt sind.

10. Werkzeugmaschine nach einem der Ansprüche 1 bis 9, dadurch gekennzeichnet, daß der Fluidmelder (23) unterhalb von dem Auslaß (21) der Drehdurchführung (18) angeordnet ist.

11. Werkzeugmaschine nach Anspruch 10, dadurch gekennzeichnet, daß der Auslaß (21) mit dem Fluidmelder (23) über einen Schlauch (22) verbunden ist, der für das leckende Fluid durchgehend eine Gefällstrecke darstellt.

12. Werkzeugmaschine nach einem der Ansprüche 1 bis 11, dadurch gekennzeichnet, daß das drehbar gelagerte Teil (12) eine Spindel (13) ist.

13. Werkzeugmaschine nach einem der Ansprüche 1 bis 12, dadurch gekennzeichnet, daß die Drehdurchführung (18) ein drehfestes sowie ein drehbares Rohrteil (51, 44) aufweist, an beiden Rohrteilen (51, 44) je ein Gleitring (48, 47) angeordnet ist, die beiden Gleitringe (48, 47) mit ihren Dichtflächen aufeinander liegen und so eine Nahtstelle (55) zwischen den Rohrteilen (51, 44) bilden sowie für eine Abdichtung des durch die Rohrteile (51, 44) fließenden Fluids sorgen.

14. Werkzeugmaschine nach Anspruch 13, dadurch gekennzeichnet, daß das drehfeste Rohrteil (51) in Längsrichtung verschiebbar angeordnet und mit einer Druckfläche (54) verbunden ist, auf die fließendes Fluid einen derartigen Druck ausübt, daß die Dichtflächen der Gleitringe (48, 47) trotz ihrer Relativbewegung zueinander eine Abdichtung der Nahtstelle (55) bewirken.

15. Werkzeugmaschine nach Anspruch 14, dadurch gekennzeichnet, daß die Nahtstelle (55) von einem ansonsten gegenüber der Werkzeugmaschine (10) abgedichteten Leckraum (56) umgeben ist, der mit dem Auslaß (21) verbunden ist.

## Claims

1. A machine tool having a rotatably mounted part (12) and a rotary lead through (18) connected thereto, through the latter a fluid being deliverable to the rotatably mounted part (12), wherein the rotary lead through (18) has an outlet (21) from which leaking fluid emerges in the event of a leak in the rotary lead through (18), and wherein the outlet (21) is connected to a fluid sensor (23) which detects the emerging fluid and reports the leak,
characterized in that the fluid sensor (23) comprises two electrodes (71, 72) which project preferably from above into a conduit (38) through which the leaking fluid passes.

2. The machine tool of claim 1, characterized in that the fluid sensor (23) reports emerging fluid only above a specific leakage rate.

3. The machine tool of claim 1 or claim 2, characterized in that the electrodes (71, 72) project into the conduit (28) one behind the other in the direction of the fluid flow.

4. The machine tool of any of claims 1 - 3, characterized in that the two electrodes (71, 72) are connected to a voltage source (73) and to a measuring instrument (75) which measures an electrical variable of the fluid.

5. The machine tool of claim 4, characterized in that the electrical variable is a resistance or a capacitance.

6. The machine tool of any of claims 1 - 5, characterized in that the fluid sensor (23) comprises a mounting block (27) attached to the machine tool (10), in which mounting block the conduit (27) is provided into which the electrodes (71, 72) project.

7. The machine tool of claim 6, characterized in that the electrodes (71, 72) are screws (34, 35) screwed from outside into threaded holes (33, 36) in the mounting block (27).

8. The machine tool of claim 7, characterized in that holes (66, 67) are provided that extend perpendicular to the threaded holes (63, 66) and open into the threaded holes, connecting wires (64, 65) being inserted into the holes and connected electrically to the screws (34, 35).

9. The machine tool of claim 8, characterized in that the connecting wires (64, 65) are secured to the mounting block (27) by means of a strain relief (61), preferably a retaining clamp (62).

10. The machine tool of any of claims 1 - 9, characterized in that the fluid sensor (23) is arranged below the outlet (21) of the rotary lead through (18).

11. The machine tool of claim 10, characterized in that the outlet (21) is connected to the fluid sensor (23) via a hose (22) that represents a continuous descending gradient for the leaking fluid.

12. The machine tool of any of claims 1 - 11, characterized in that the rotatably mounted part (12) is a spindle (13).

13. The machine tool of any of claims 1 - 12, characterized in that the rotary lead through (18) comprises a non-rotatable and a rotatable tube part (51, 44), that at each of the two tube parts (51, 44) a sliding ring (48, 47) is arranged, that both sliding rings (48, 47) rest against one another with their sealing surfaces and thus constitute a joint (55) between the tube parts (51, 54) and provide for a sealing of the fluid flowing through the tube parts (51, 44).

14. The machine tool of claim 13, characterized in that the non-rotatable tube part (51) is arranged displaceably in longitudinal direction and is connected to a pressure surface (54) whereupon flowing fluid exerts a pressure such that the sealing surfaces despite their motion relative to one another effect sealing of the joint (55).

15. The machine tool of claim 14, characterized in that the joint (55) is surrounded by a leakage space (56) that is otherwise sealed with respect to the machine tool (10) and that is connected to the outlet (21).

## Revendications

1. Machine-outil avec une partie (12) montée tournante et un passage tournant (18) relié à celle-ci, par laquelle un fluide peut être acheminé à la partie (12) montée tournante, le passage tournant (18) présentant une sortie (21) par laquelle le fluide s'écoule en cas de fuite dans le passage tournant (18) et la sortie (21) étant reliée à un indicateur de fluide (23) qui détecte le fluide sortant et qui signale la fuite, caractérisée en ce que l'indicateur de fluide (23) comporte deux électrodes (71, 72) qui s'engagent de préférence à partir du haut dans un canal (28) que traverse la fuite de fluide.

2. Machine-outil selon la revendication 1, caractérisée en ce que l'indicateur de fluide (23) signale le fluide sortant seulement à partir d'un taux de fuite déterminé.

3. Machine-outil selon la revendication 1 ou 2, caractérisée en ce que les électrodes (71, 72) pénètrent l'une derrière l'autre dans le canal (28), dans la direction du courant du fluide.

4. Machine-outil selon l'une des revendications 1 à 3, caractérisée en ce que les deux électrodes (71, 72) sont reliées à une source de tension (73) et à un appareil de mesure (75) qui mesure une grandeur électrique du fluide.

5. Machine-outil selon la revendication 4, caractérisée en ce que la grandeur électrique est une résistance ou une capacité.

6. Machine-outil selon l'une des revendications 1 à 5, caractérisée en ce que l'indicateur de fluide (23) comprend un bloc de montage (27) fixé à la machine-outil (10) dans lequel est prévu le canal (28) dans lequel pénètrent les électrodes (71, 72).

7. Machine-outil selon la revendication 6, caractérisée en ce que les électrodes (71, 72) sont des vis (34, 35) qui sont vissées de l'extérieur dans des trous taraudés (33, 36) du bloc de montage (27).

8. Machine-outil selon la revendication 7, caractérisée en ce que dans des perçages (66, 67) qui s'étendent transversalement aux trous taraudés (63, 66) et qui débouchent dans ceux-ci, sont introduits les fils de connexion (64, 65) qui sont reliés électriquement aux vis (34, 35).

9. Machine-outil selon la revendication 8, caractérisée en ce que les fils de connexion (64, 65) sont fixés au bloc de montage (27), par une décharge de traction (61), de préférence un collier de retenue (62).

10. Machine-outil selon l'une des revendications 1 à 9, caractérisée en ce que l'indicateur de fluide (23) est disposé au-dessous de la sortie (21) du passage tournant (18).

11. Machine-outil selon la revendication 10, caractérisée en ce que la sortie (21) est reliée à l'indicateur de fluide (23) par un tuyau (22) qui constitue d'un bout à l'autre une distance en pente pour la fuite de fluide.

12. Machine-outil selon l'une des revendications 1 à 11, caractérisée en ce que la partie (12) montée tournante est une broche (13).

13. Machine-outil selon l'une des revendications 1 à 12, caractérisée en ce que le passage tournant (18) présente un élément tubulaire fixe en rotation (51) ainsi qu'un élément tubulaire tournant (44), une bague de glissement (48, 47) étant disposée sur chacun des deux éléments tubulaires (51, 44), les deux bagues de glissement (48, 47) reposent l'une sur l'autre par leurs surfaces d'étanchéité et forment ainsi un joint (55) entre les éléments tubulaires (51, 44), de même qu'elles assurent l'étanchéification à l'égard du fluide qui s'écoule à travers les éléments tubulaires (51, 44).

14. Machine-outil selon la revendication 13, caractérisée en ce que l'élément tubulaire fixe en rotation (51) est disposé de manière à pouvoir coulisser dans la direction longitudinale et est relié à une surface de pression (54) sur laquelle le fluide s'écoulant exerce une pression telle que les surfaces d'étanchéité des bagues de glissement (48, 47) assurent une étanchéification du joint (55), malgré leur déplacement relatif.

15. Machine-outil selon la revendication 14, caractérisée en ce que le joint (55) est entouré par une chambre de fuite (56) rendue étanche par ailleurs à l'égard de la machine-outil (10) et qui est reliée à la sortie (21).
